# FASCICULE DE BREVET EUROPEEN

(11) **EP 1 422 091 B1**
(45) Date de publication et mention de la délivrance du brevet: **17.05.2006**
(21) Numéro de dépôt: 03364033.5
(22) Date de dépôt: 21.11.2003
(51) Int. Cl.: B60J 1/17, B60J 10/06

(54) **Portière de véhicule automobile à panneau vitré coulissant, et ensemble supérieur de portière, procédé de fabrication et véhicule correspondants**
Fahrzeugtüre mit verschiebbarer Fensterscheibe, dazugehöriges oberes Türmodul, Fahrzeug und Herstellungsverfahren
Vehicle door with slidable window pane, corresponding upper door module, vehicle and producing method

(30) Priorité: 21.11.2002 FR 0214611; 21.11.2002 FR 0214612; 29.11.2002 FR 0215107; 16.04.2003 FR 0304795
(43) Date de publication de la demande: 26.05.2004
(73) Titulaire: WAGON SAS, 79300 Bressuire (FR)
(72) Inventeur: Moreau, Stéphane, 49300 Le Puy Saint Bonnet (FR)
(74) Mandataire: Vidon, Patrice

(56) Documents cités:
- US-A- 4 788 794
- US-A- 5 086 586

## Description

Le domaine de l'invention est celui des baies ménagées dans les portes de véhicule. Plus précisément, l'invention concerne les dispositifs d'obturation d'une baie ménagée dans une porte d'un véhicule automobile et comprenant une partie mobile selon une direction essentiellement verticale, susceptible de fermer ou de libérer une ouverture.

L'invention s'applique en particulier, mais non exclusivement aux portières latérales des véhicules automobiles, et peut s'appliquer également aux portières arrières, ou aux hayons.

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la vitre, avec une garniture d'étanchéité.

La technique le plus couramment répandue pour l'ouverture et la fermeture des vitres est de rendre celle-ci mobile verticalement dans son propre plan, en la faisant pénétrer ou sortir du caisson ou de la garniture des portières latérales.

Cette technique est aujourd'hui couramment utilisée et des solutions pour l'automatiser sont connues. L'équipement des automobiles en vitres électriques est aujourd'hui très répandu.

Parallèlement, une autre technique a été proposée par le Titulaire de la présente demande de brevet. Cette technique est notamment décrite dans les documents de brevet EP-0 778 168 et EP - 0 857 844.

Grâce à cette technique, on obtient des « baies flush » qui présentent, sur le plan esthétique, vue de l'extérieur, un aspect lisse, affleurant du fait qu'aucun cadre n'est nécessaire.

Selon la technique antérieure proposée par le Titulaire de la présente demande de brevet, les « baies flush » comprennent un ensemble fixe et une partie mobile, l'ensemble fixe étant destiné à être monté dans le logement défini à cet effet sur la carrosserie du véhicule.

Or, les baies ménagées dans les portières ont des dimensions relativement limitées qu'il n'est donc pas opportun de réduire davantage en rapportant un ensemble fixe selon la technique antérieure.

Pourtant, il est souhaitable de pouvoir équiper certains véhicules, en particulier des véhicules haute gamme tels que les monospaces, de baies affleurantes, les baies flush antérieures n'étant pas adaptées aux portières de ces véhicules. On connait également le document US-4 788 794 A qui décrit une portière de vehicule automobile selon le préambule de la revendication 1, équipée d'une baie dont la vitre subit un pivotement à l'ouverture et à la femeture de la fenêtre

Par la présente invention, on propose une solution permettant de fermer une baie ménagée dans une portière de véhicule par un panneau affleurant pourvu d'une partie mobile verticalement pour assurer une fonction d'aération.

L'invention a de plus pour objectif de fournir un tel dispositif d'obturation qui permette de résoudre les problèmes particuliers liés à la structure d'une portière.

Par ailleurs, un autre objectif de l'invention est de fournir un tel dispositif d'obturation dont on assure l'étanchéité de façon fiable et pérenne.

L'invention a aussi pour objectif de fournir un tel dispositif d'obturation qui évite d'induire des effets néfastes et indésirables entre le panneau mobile et les moyens d'étanchéité associés.

L'invention a également pour objectif de fournir un tel dispositif d'obturation qui permette de réaliser des portières présentant des caractéristiques nouvelles, notamment en ce qui concerne l'esthétisme et l'ergonomie.

Un autre objectif de l'invention est de fournir un tel dispositif d'obturation qui soit simple de conception et facile à mettre en oeuvre.

L'invention a encore pour objectif, selon certains modes de réalisation, de fournir une telle portière qui permette :
- intégration aisée et esthétique d'un dispositif d'occultation ;
- sécurisation du dispositif d'obturation contre d'éventuelles tentatives d'intrusions ;
- ...

Encore un autre objectif de l'invention est de fournir un procédé de fabrication d'une portière pour véhicule automobile, qui soit simple et rapide à mettre en oeuvre.

Ces objectifs ainsi que d'autres qui apparaîtront par la suite, sont atteints grâce à l'invention qui a pour objet une portière d'un véhicule automobile, comprenant un caisson de carrosserie et au moins un panneau vitré mobile, susceptible de coulisser au moins partiellement à l'intérieur dudit caisson entre une position d'obturation et au moins une position d'ouverture, la portière comprenant au moins un montant portant un joint d'étanchéité contre lequel la face dudit panneau vitré mobile tournée vers l'intérieur du véhicule prend appui, dans ladite position d'obturation, chacun desdits montants portant au moins une rampe de louvoiement permettant d'éloigner légèrement ledit panneau vitré mobile dudit joint d'étanchéité, dans une position de coulissement dans laquelle ledit panneau mobile peut coulisser sans détériorer ledit joint d'étanchéité, et de ramener ledit panneau vitré mobile et ledit joint d'étanchéité en appui l'un contre l'autre, dans ladite position d'obturation.

De cette façon, on assure l'étanchéité du dispositif lorsque le panneau mobile est en position d'obturation, tout en évitant, ou à tout le moins en limitant, les effets néfastes ou indésirables du fait de l'interaction entre le panneau mobile et le joint d'étanchéité.

En effet, en écartant le panneau mobile du joint pendant que le panneau coulisse verticalement, on évite :
- une usure prématurée du joint d'étanchéité susceptible d'être provoquée par les frottements successifs du panneau contre le joint ;
- des bruits (tels que des crissements), à nouveau du fait du frottement du panneau contre le joint, de tels bruits pouvant augmenter avec les modifications de structure du joint du fait des variations de température, d'humidité ou encore du fait du rayonnement du soleil, de l'usure...

L'utilisation des rampes permet d'assurer cette fonction de façon simple et efficace.

Selon une solution avantageuse, dans ladite position de coulissement, ledit panneau vitré se trouve dans un plan de coulissement parallèle à un plan d'obturation occupé par ledit panneau vitré en position d'obturation.

Selon une solution préférée, chacun desdits montants porte au moins deux rampes de louvoiement, respectivement au voisinage des parties supérieure et inférieure dudit montant.

Selon une solution avantageuse, moins un desdits montants pénètre à l'intérieur dudit caisson.

Préférentiellement, le ou lesdits montants sont conçus de façon à ne venir en contact qu'avec la face dudit panneau vitré mobile tournée vers l'intérieur du véhicule, de façon à présenter un aspect affleurant dans ladite position d'obturation.

On obtient donc une portière comprenant une vitre coulissante dans une direction verticale et qui présente un aspect affleurant ainsi qu'un aspect aérodynamique, compatibles avec les autres « baies flush » proposées par le Titulaire de la présente demande.

Avantageusement, lesdits montants sont reliés en leur partie supérieure par une traverse, pour former un cadre intérieur, ledit joint d'étanchéité s'étendant sensiblement sur toute la longueur dudit cadre.

On comprend donc que l'invention fournit un dispositif d'obturation selon lequel il n'est pas prévu de rapporter un ensemble fixe définissant un plan de coulissement pour le panneau mobile comme c'est le cas avec la technique antérieure.

Au contraire, le dispositif exploite le ou les montants, ou le cadre, existant classiquement sur une portière, comme moyen support du panneau lorsque celui-ci est en position d'obturation. En d'autres termes, en position d'obturation, le panneau mobile vient se placer devant et en appui contre le ou les montants ou le cadre, le joint assurant l'étanchéité du dispositif d'obturation ainsi réalisé.

Par ailleurs, l'invention permet de supprimer les enjoliveurs de cadre classiquement rapportés sur les portières latérales.

Selon une solution avantageuse, ledit panneau mobile est monté sur au moins un patin dont le déplacement est guidé par un rail de guidage et la ou lesdites rampes de louvoiement.

Avantageusement, la portière comprend des moyens d'entraînement motorisés dudit panneau mobile, assurant ledit coulissement..

On notera toutefois que, selon un autre mode de réalisation envisageable, les moyens d'entraînement peuvent être manuels.

Selon une première variante, lesdits moyens d'entraînement sont montés dans un rail unique monté à l'intérieur dudit caisson, et/ou dans au moins un desdits montants.

Dans ce cas et selon la première approche, lesdits moyens d'entraînement agissent avantageusement sur au moins un desdits patins.

Selon une autre caractéristique, la portière comprend en outre au moins un panneau fixe, monté dans ledit plan d'obturation.

Selon un mode de réalisation particulier, la portière comprend au moins un balai d'essuie glace destiné à être déplacé sur ledit panneau en position d'obturation, des moyens de guidage étant prévus sur ledit ou lesdits montants de façon à permettre un déplacement linéaire dudit ou desdits balais.

Selon un autre aspect avantageux de l'invention, la portière peut porter un store d'occultation.

De cette façon, on simplifie considérablement les gammes de montage et on évite au moins en grande partie les réglages nécessaires au bon fonctionnement du store, ceci en comparaison avec les stores classiques fixés à une garniture, elle-même fixée à la structure d'une portière.

Selon une solution préférée, au moins un desdits montants présente des moyens de guidage du coulissement de la barre de tirage dudit store.

Selon une autre caractéristique, la portière comprend des moyens anti-effraction agissant sur ledit panneau mobile en position d'obturation.

Dans ce cas, lesdits moyens anti-effraction comprennent préférentiellement au moins un verrou destiné à coopérer avec un logement de forme complémentaire défini dans un desdits montants ou dans ledit cadre, en vue d'obtenir une position d'inviolabilité dudit panneau en position d'obturation, selon laquelle le panneau ne peut être trié vers l'extérieur dudit véhicule.

Selon une solution avantageuse, ledit ou lesdits verrous sont conçus pour venir s'emboîter avec une partie faisant saillie desdits montants ou dudit cadre.

Selon encore une autre caractéristique, la portière comprend des moyens de réglage de ladite position d'obturation dudit panneau mobile et/ou desdits moyens anti-effraction.

Ainsi, il est possible d'ajuster rapidement et facilement la position du panneau mobile par rapport à ses environnants (cadre, carrosserie, custode, ...).

Dans ce cas, lesdits moyens de réglage sont avantageusement portés par ledit panneau mobile ou par un élément solidaire de celui-ci, et sont destinés à coopérer avec ledit cadre pour ajuster ladite position d'obturation dudit panneau mobile.

Selon une solution préférée, lesdits moyens de réglage comprennent deux vis, l'une agissant sur ladite position d'obturation dans le sens de la largeur dudit panneau mobile, l'autre agissant sur ladite position d'obturation dans le sens de la hauteur dudit panneau mobile.

Selon une solution avantageuse, ledit ou lesdits montants et/ou ladite traverse sont réalisés par extrusion.

On peut ainsi concevoir et réaliser les montants de façon à ce qu'ils intègrent toutes les parties fonctionnelles permettant la mise en oeuvre des caractéristiques décrites précédemment.

L'invention concerne également un ensemble supérieur de portière de véhicule automobile, formant un tout prêt à être assemblé à un caisson inférieur de portière de véhicule automobile, et comprenant au moins un panneau vitré mobile, susceptible de coulisser au moins partiellement à l'intérieur dudit caisson entre une position d'obturation et au moins une position d'ouverture, la portière comprenant au moins un montant portant un joint d'étanchéité contre lequel la face dudit panneau vitré mobile tournée vers l'intérieur du véhicule prend appui, dans ladite position d'obturation, chacun desdits montants portant au moins une rampe de louvoiement permettant d'éloigner légèrement ledit panneau vitré mobile dudit joint d'étanchéité, dans une position de coulissement dans laquelle ledit panneau mobile peut coulisser sans détériorer ledit joint d'étanchéité, et de ramener ledit panneau vitré mobile et ledit joint d'étanchéité en appui l'un contre l'autre, dans ladite position d'obturation.

Selon une solution avantageuse, cet ensemble supérieur comprend des moyens de rigidification.

Dans ce cas, lesdits moyens de rigidification comprennent préférentiellement au moins une traverse inférieure reliant la partie inférieure desdits montants.

Avantageusement, ladite traverse inférieure présente des moyens de mise en place et/ou de maintien desdits montants.

Préférentiellement, lesdits moyens de mise en place et/ou de maintien comprennent au moins un manchon ménagé à une extrémité de ladite traverse inférieure et destiné à former un logement pour l'un desdits montants.

Avantageusement, lesdits rails de guidage portent au moins une patte de fixation au montant et/ou à la traverse inférieure.

Le montage de l'ensemble supérieur qui vient d'être décrit peut donc être obtenu de façon particulièrement simple et efficace : les montants sont emmanchés sur la traverse, puis les rails de guidage sont fixés aux montants. Comme cela va apparaître par la suite, il reste alors à solidariser le panneau vitré mobile aux patins d'entraînement, par exemple par simple clippage. Un tel montage sur chaînes de fabrication est donc grandement simplifié par rapport au montage classique des portières traditionnelles.

Un tel agencement est également particulièrement avantageux lors d'éventuelles opérations de maintenance, le démontage de l'ensemble pouvant être obtenu en procédant à un nombre limité d'opérations simples et de façon inverse au montage.

Selon une autre caractéristique, cet ensemble supérieur comprend des moyens de motorisation.

Dans ce cas, lesdits moyens de motorisation sont préférentiellement montés sur ladite traverse inférieure, et comprennent avantageusement :
- au moins un motoréducteur ;
- au moins une bobine couplée audit motoréducteur ;
- au moins un câble multi-torons ;
- au moins une gaine de protection dudit ou desdits câbles ;
- des moyens de mise en tension dudit ou desdits câbles.

Bien entendu, d'autres modes de réalisation sont envisageables sans sortir du cadre de l'invention, notamment en prévoyant des moyens de motorisation mettant en oeuvre des câbles de type crémaillère.

L'assemblage (ou le pré-assemblage) des moyens de motorisation avec la traverse permet d'envisager la fabrication et le montage (sur la traverse) des moyens de motorisation de façon indépendante de la portière, voire de façon indépendante de l'ensemble supérieur. La réalisation de cette partie comprenant les moyens de motorisation peut par conséquent être sous traitée et livrée dans un état prêt à être monté.

Selon une solution préférée, au moins un desdits montants présente un prolongement destiné à pénétrer dans ledit caisson de façon à permettre la solidarisation dudit caisson avec ledit ensemble.

Avantageusement, l'ensemble supérieur porte un store d'occultation.

Ainsi, on livre un ensemble supérieur complet, pré-équipé et réglé (intégrant une baie, des moyens de motorisation, un store, des moyens d'étanchéité, ...), ce qui réduit de façon notable les problèmes liés notamment à la logistique et/ou la livraison de tous ces organes considérés séparément.

L'invention concerne aussi un véhicule automobile équipé d'une portière telle que décrite précédemment.

L'invention concerne encore un procédé de fabrication d'une portière de véhicule automobile, caractérisé en ce qu'il comprend les étapes suivantes :
- fabrication d'un caisson inférieur de portière ;
- assemblage d'un ensemble supérieur de portière tel que décrit précédemment ;
- assemblage dudit caisson inférieur et dudit ensemble supérieur.

De cette façon, les différents moyens constituant l'ensemble supérieur peuvent être assemblés et pré-réglés avant d'être solidarisés avec le caisson de portière.

Le montage de l'ensemble supérieur sur le caisson s'effectue simplement ; le procédé de fabrication d'une portière selon l'invention permet donc au constructeur de véhicule automobile d'envisager des gains de temps notables, celui-ci ayant uniquement à réaliser le caisson et son assemblage avec un ensemble pré-réglé, prêt à l'emploi.

Préférentiellement, ladite étape de fabrication dudit ensemble supérieur comprend une étape de façonnage d'au moins un desdits montants de façon à ménager sur celui-ci des moyens de guidage, de mise en place et/ou de maintien dudit ou desdits montants dans ledit caisson.

Selon une solution avantageuse, ladite étape de fabrication dudit ensemble supérieur comprend une étape de montage, sur ledit ou lesdits montants, d'un joint d'étanchéité contre lequel la face dudit panneau vitré mobile tournée vers l'intérieur du véhicule vient prendre appui dans ladite position d'obturation, et une étape de montage de moyens pour éloigner légèrement ledit panneau vitré mobile et ledit joint d'étanchéité l'un de l'autre, dans une position de coulissement dans laquelle ledit panneau mobile peut coulisser sans détériorer ledit joint d'étanchéité, et pour ramener ledit panneau vitré mobile et ledit joint d'étanchéité en appui l'un contre l'autre, dans ladite position d'obturation.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue éclatée d'une portière selon l'invention ;
- la figure 2 est une vue de détail des moyens de guidage d'un dispositif d'obturation selon l'invention ;
- la figure 2a est une représentation schématique des moyens de guidage d'un dispositif d'obturation selon l'invention ;
- la figure 3 est une vue d'un ensemble supérieur destiné à être monté sur un caisson de portière ;
- la figure 4 est une vue d'un ensemble supérieur de portière selon l'invention, équipé d'un store d'occultation ;
- les figures 5 et 6 sont des vues de détail du montage d'un store d'occultation sur un ensemble supérieur de portière selon l'invention ;
- la figure 7 est une autre vue de l'ensemble supérieur illustré par la figure 4, le store étant en position d'occultation ;
- les figures 8 à 10 sont des vues en coupe respectivement de la traverse, du montant central et du montant avant de l'ensemble supérieur illustré par la figure 4 ;
- les figures 11 et 12 sont des vues des moyens de verrouillage/déverrouillage du panneau mobile d'une portière selon l'invention ;
- les figures 13a et 13b sont des vues de deux panneaux mobiles, respectivement de forme rectangulaire et trapézoïdale, permettant d'illustrer la position des moyens de verrouillage/déverrouillage ;
- la figure 14 est une vue de face d'un hayon selon le principe de l'invention, pré-équipé d'un dispositif d'essuie-glace ;
- les figures 15 et 16 sont des vues d'un mode de réalisation préféré d'un ensemble supérieur destiné à être rapporté sur un caisson de portière, cet ensemble étant respectivement à l'état démonté et à l'état monté.

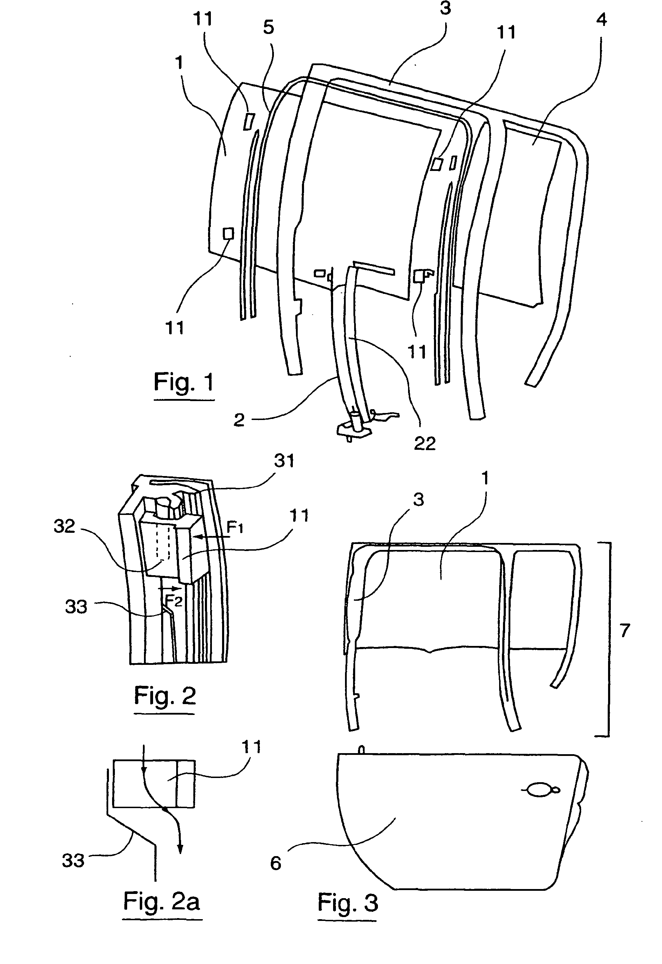

En référence à la figure 1, une portière comprend, selon le présent mode de réalisation de l'invention :
- un panneau mobile 1 selon une direction essentiellement verticale le long d'un rail central 22, entraîné entre une position d'obturation et une position d'ouverture à l'aide de moyens d'entraînement motorisés (du type câble push-pull par exemple) comprenant un motoréducteur 21 ;
- des moyens de guidage (expliqués plus en détail par la suite) prévus dans les montants du cadre 3 et destinés à coopérer avec des patins de coulissement 11 portés par le panneau mobile 1.

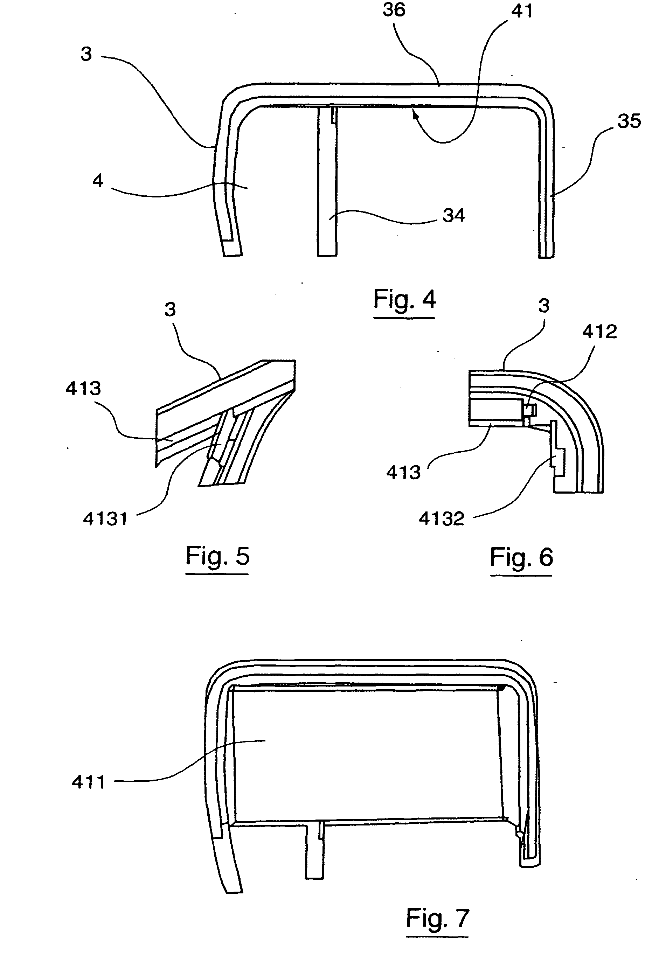

Selon l'objet de l'invention, le cadre 3 est rapporté et fixé sur un caisson de portière latérale d'un véhicule, tel qu'illustré par la figure 3.

On note que, selon le présent mode de réalisation, le cadre 3 est prévu pour supporter une vitre fixe custode 4, indépendamment du dispositif d'obturation selon l'invention. Cette vitre 4 et, par conséquent, la partie du cadre correspondante sont donc tout à fait optionnelles.

Avantageusement, la custode 4 partage l'un des montants du cadre avec le panneau mobile, et est montée de façon à offrir un aspect affleurant, de même que le panneau mobile.

Selon une caractéristique de l'invention, un joint d'étanchéité 5 est rapporté sur le cadre 3 de façon à s'étendre sur toute la longueur de la partie visible du cadre une fois celui-ci assemblé avec le caisson de portière.

En position d'obturation, le panneau mobile 1 vient en appui contre ce joint d'étanchéité 5 en l'écrasant légèrement pour assurer une fermeture hermétique du dispositif vis-à-vis notamment de l'humidité et des courants d'air.

Tel qu'illustré par la figure 2, les patins 11 portés par le panneau mobile 1 sont destinés à coulisser sur des rails 31 ménagés sur les montants du cadre 3.

Selon l'invention, la portière comprend des moyens pour éloigner légèrement le panneau vitré 1 mobile et le joint d'étanchéité 5 l'un de l'autre, dans une position de coulissement dans laquelle le panneau mobile 1 peut coulisser sans détériorer le joint d'étanchéité 5, et pour ramener le panneau vitré mobile 1 et le joint d'étanchéité 5 en appui l'un contre l'autre, dans la position d'obturation.

Selon le présent mode de réalisation, ces moyens sont constitués par des rampes de louvoiement 32, 33 du déplacement de verrouillage/déverrouillage et destinées à coopérer avec les patins 11.

On note que le panneau mobile 1 porte au voisinage de chacun de ses bords verticaux, deux patins 11, l'un au voisinage du bord supérieur, l'autre au voisinage du bord inférieur. Parallèlement, deux paires de rampes 32, 33 (agissant respectivement à la descente et à la montée) sont prévus sur chaque montant du cadre 3, une paire au voisinage de l'extrémité supérieure du montant correspondant, l'autre au voisinage de son extrémité inférieure.

Ainsi, lors d'un mouvement de descente (initialisé à partir d'une position d'obturation) du panneau mobile 1, le bord inférieur des patins 11 vient glisser sur le bord supérieur de la rampe de louvoiement 33, ce qui provoque un décalage du panneau mobile dans la direction indiquée par la flèche F2 sur la figure 2. Ce déplacement est également illustré schématiquement par la figure 2a.

Le panneau mobile peut ensuite être descendu jusqu'à une position définie par une butée.

Inversement, lors d'un mouvement ascendant du panneau mobile 1, (le bord supérieur de celui-ci arrivant à proximité du bord supérieur du cadre 3), le bord supérieur des patins 11 vient glisser sur le bord inférieur des rampes de louvoiement 32, ce qui provoque un déplacement du panneau mobile dans la direction indiquée par la flèche F1.

La position haute du panneau mobile est par ailleurs définie par une butée mécanique.

On note que le déplacement dans la direction indiquée par la flèche F1 est prévu pour que le panneau mobile 1 vienne en appui sur le joint d'étanchéité 5 pour assurer avec lui une fermeture étanche, le déplacement dans la direction indiquée par la flèche F2 étant quant à lui prévu pour écarter suffisamment le panneau du joint, jusqu'à une position dans laquelle ils ne sont plus en contact.

On note également que la présence des paires de patins telle qu'indiquée précédemment et des moyens de guidage correspondants, en haut et en bas des montants du cadre, assurent un déplacement de verrouillage/déverrouillage du panneau mobile selon lequel celui-ci reste en permanence sensiblement parallèle à lui-même.

Par ailleurs, selon le présent mode de réalisation, le panneau mobile est une vitre teintée permettant de masquer, en position d'obturation le cadre 3 et le joint d'étanchéité 5.

Selon une caractéristique avantageuse de l'invention, le dispositif d'obturation peut équiper un ensemble 7 (figure 3) prêt à monter sur un caisson 6 de portière comprenant classiquement un panneau extérieur, une doublure, différents moyens de renforts, des systèmes d'ouverture/fermeture.

Un tel ensemble 7 comprend :
- un cadre 3 dont l'un au moins des montants comprend des moyens de guidage tels que décrits précédemment ;
- un panneau mobile 1 portant des patins 11 destinés à coopérer avec les moyens de guidage du cadre.

Cet ensemble pourra de plus être pré-équipé des moyens de motorisation.

Ces moyens de motorisation peuvent être du type décrit précédemment (rail central).

Selon un autre mode de réalisation envisageable, l'ensemble 7 peut être équipé de moyens de motorisation composé également d'un moto-réducteur et d'un système d'entraînement à câble push-pull, le système d'entraînement étant relié aux patins portés par le panneau. Dans ce cas, les moyens d'entraînement s'étendent dans les montants du cadre.

Ce deuxième mode de réalisation permet par conséquent de supprimer le rail central 22, le montage de l'ensemble 7 sur le caisson étant alors plus aisé que dans le cas du premier mode de réalisation.

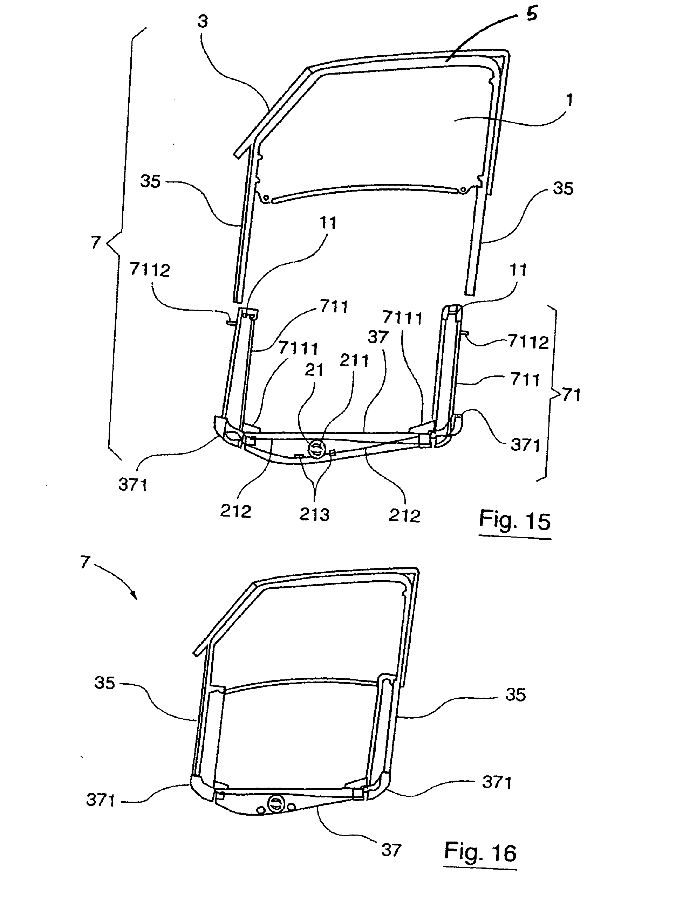

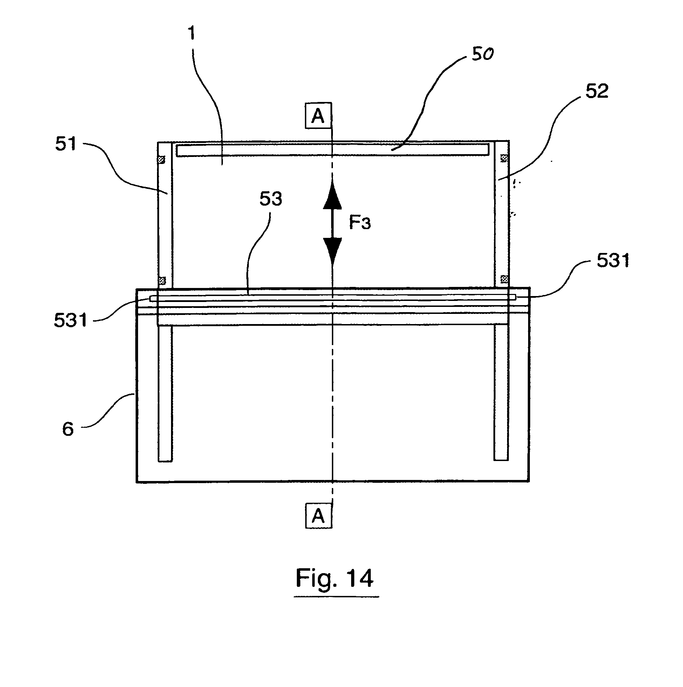

Selon encore un autre mode de réalisation illustré par la figure 15, l'ensemble supérieur 7 est constitué par un cadre 3, un panneau vitré mobile 1, un joint d'étanchéité 5 et une partie inférieure 71 qui va être explicitée plus en détails par la suite.

Selon le présent mode de réalisation, cette partie inférieure 71 de l'ensemble 7 comprend deux rails de guidage 711 montés aux extrémités d'une traverse 37 à l'aide de pattes de fixation 7111.

Tel qu'indiqué sur les figures 15 et 16, la traverse 37 présente à chacune de ses extrémités un manchon 371 formant logement pour un montant 35 du cadre. La figure 5 illustre un ensemble supérieur 7 à l'état monté et dans lequel les montants 35 du cadre sont emmanchés dans les manchons 371 de la traverse 37, les rails 711 étant de plus fixés aux montants 35 à l'aide des pattes de fixation 7112.

On comprend donc que cette partie inférieure 71 exerce une fonction de rigidification de l'ensemble supérieur 7. En effet, la traverse 37 relie les montants 35 par leur extrémité inférieure, cette liaison étant par ailleurs consolidée par les rails 711 fixés (avant assemblage de la partie inférieure 71 au cadre 3) à la traverse d'une part, et aux montants 35 d'autre part.

Selon une autre caractéristique, la traverse 37 porte des moyens de motorisation comprenant :
- un motoréducteur 21
- une bobine 211 couplée au motoréducteur 21 ;
- des câbles multi-torons 212 reliant la bobine 211 aux patins 11 ;
- des gaines de protection (non représentées) des câbles 212;
- des moyens de mise en tension 213 (connus de l'homme du métier) des câbles 212.

On note que l'entraînement à l'aide de câbles multitorons pourra être modifié dans d'autres modes de réalisation envisageables, notamment en utilisant des câbles de type crémaillère.

Le procédé de fabrication et de montage d'un ensemble supérieur comprend, selon l'agencement qui vient d'être décrit, les étapes suivantes :
- réalisation d'une partie inférieure 71, comprenant deux rails de guidage latéraux 711 reliés par une traverse 37 présentant à ses extrémités des manchons 371 ;
- assemblage de cette partie inférieure avec un cadre 3, notamment par l'emmanchement des montants 35 dans les manchons 371 de la traverse 37 et par la fixation des rails de guidage 711 avec les montants 35 .

Comme indiqué précédemment, cette partie inférieure peut être prééquipée de moyens de motorisation et d'entraînement, tels que ceux indiqués précédemment dans le cadre du présent mode de réalisation. Dans ce cas, le montage de l'ensemble supérieur 7 comprend une étape d'assemblage du panneau vitré mobile avec les patins du système d'entraînement.

L'ensemble 7 étant pré-assemblé, la fabrication d'une portière est obtenue rapidement et simplement en insérant l'ensemble 7 dans le caisson 6, entre le panneau extérieur et la doublure de ce dernier, et en solidarisant les deux éléments par tout moyen approprié.

Plus précisément, les étapes essentielles du procédé selon l'invention sont :
- une première étape, selon laquelle un caisson 6 de portière est fabriqué, un tel caisson comprenant classiquement un panneau extérieur, une doublure, différents moyens de renforts, des systèmes d'ouverture/fermeture ;
- une deuxième étape, selon laquelle un ensemble supérieur 7 de portière est réalisé, un tel ensemble comprenant un cadre 3 dont l'un au moins des montants comprend des moyens de guidage d'un panneau mobile 1, ces montants étant destinés à pénétrer le caisson 6 et à être fixé dans celui-ci ;
- une troisième étape consistant à faire pénétrer les montants de l'ensemble supérieur 7 dans le caisson 6 et à assembler par tout moyen approprié (par vissage, par soudage...) les montants à l'intérieur du caisson.

On comprend que l'ordre des deux premières étapes est fourni à titre indicatif, ces deux étapes étant, dans la pratique, réalisées parallèlement.

Par ailleurs, selon une caractéristique avantageuse, la portière qui vient d'être décrite peut être équipée d'un store d'occultation 41 comprenant une toile 411 mobile entre une position repliée (figure 4) et une position déployée (figure 7).

On remarque que le store 41 est dimensionné de façon à pouvoir occulter l'ensemble de la baie dé la portière y compris la vitre fixe custode 4 (il pourrait toutefois être prévu selon un autre mode de réalisation envisageable, un store spécifique pour la custode 4).

Tel qu'illustré par les figures 4 et 6, le tube d'enroulement 412 du store 41 est monté en partie supérieure du cadre 3 (il est toutefois envisageable, selon un autre mode de réalisation, que le tube d'enroulement soit monté sur une autre partie du cadre, en particulier sa partie inférieure ou un des montants).

En référence aux figures 5 et 6, la barre de tirage 413 porte des patins de coulissement 4131, 4132, guidés le long des montants central et avant du cadre 3.

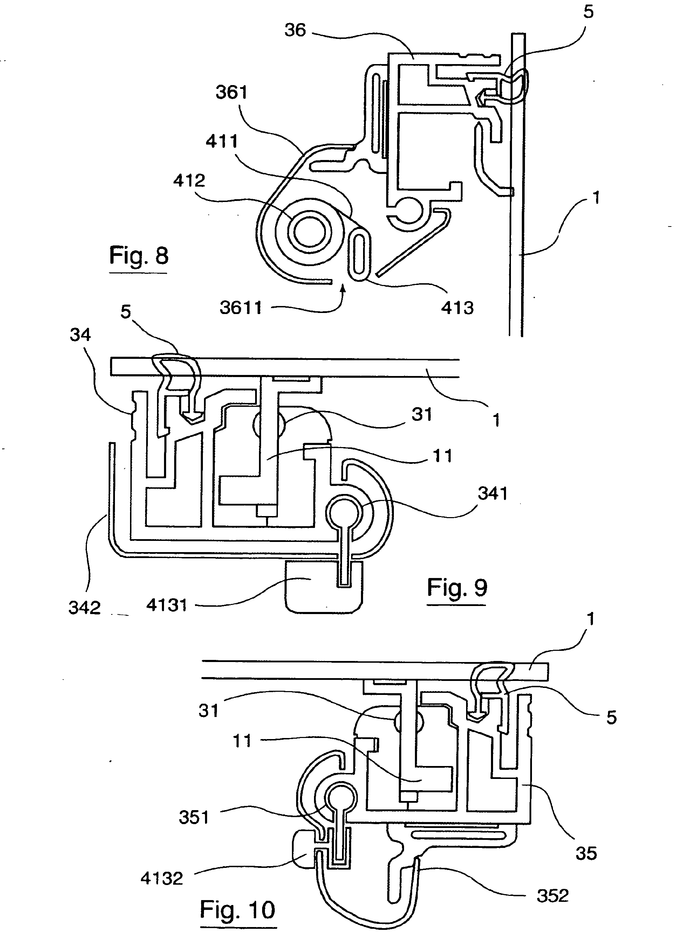

Cet aspect est illustré plus en détail par les figures 9 et 10 qui sont des vues en coupe respectivement du montant central 34 et du montant 35 du cadre 3.

Comme indiqué précédemment, ces montants intègrent un rail de guidage 31 prévue pour coopérer avec un patin 11 solidaire du panneau mobile 1 en vue de guider le coulissement de ce dernier.

On remarque que des garnitures 342 et 352 sont rapportées sur le cadre 3 en vue de masquer notamment les rails 341 et 351 et d'empêcher d'éventuelles salissures d'y pénétrer.

De plus, le montant 34 présente un autre rail de guidage 341 destiné à coopérer avec le patin 4131 (dont une extrémité pénètre le rail 341) porté par la barre de tirage 413.

De façon similaire, le montant 35 présente un rail 351 destiné à coopérer avec le patin 4132 (dont une extrémité pénètre le rail 351) porté par la barre de tirage 413.

En référence à la figure 8 qui est une vue en coupe de la traverse 36 du cadre 3, le tube d'enroulement 412 du store 41 est monté au voisinage de la traverse 36.

Une garniture 361, formant boîtier, est rapportée sur la traverse 36 de façon à masquer le tube d'enroulement 412 et d'empêcher d'éventuelles salissures d'y accéder et de nuire à son fonctionnement.

Cette garniture 361 présente une fente 3611 pour le passage de la toile 411 du store, cette fente 3611 étant dimensionnée pour permettre à la barre de tirage 413 de pénétrer à l'intérieur de la garniture en position repliée de la toile 411.

On note que, selon le présent mode de réalisation, les montants 34, 35 de la traverse 36 portent à encastrement le joint 5 destiné à assurer l'étanchéité du dispositif d'obturation lorsque le panneau mobile 1 est en position d'obturation.

Par ailleurs, la portière comprend, selon un autre aspect avantageux, des moyens anti-effraction agissant sur le panneau mobile lorsque celui-ci est en position d'obturation.

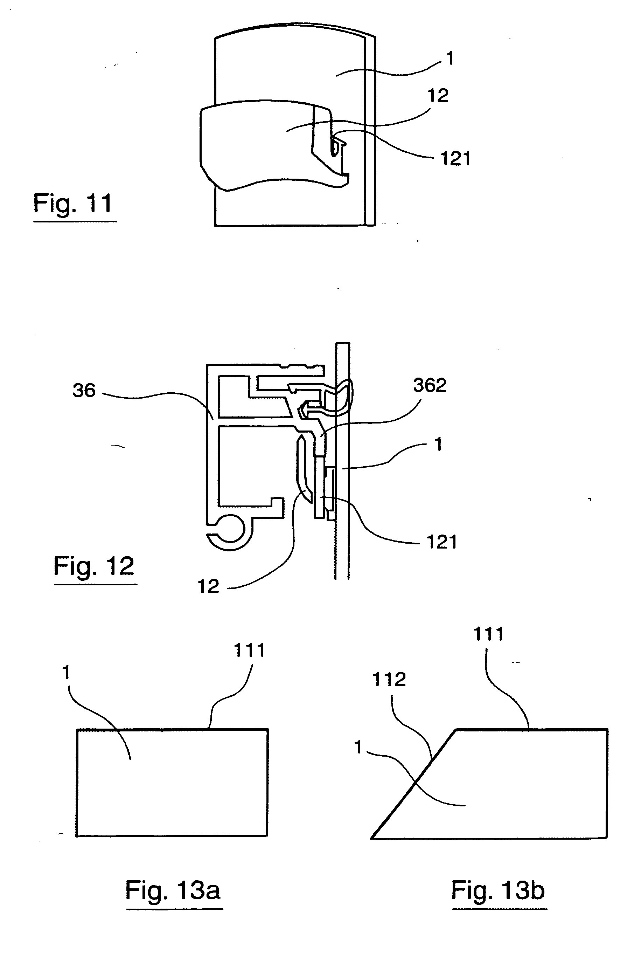

Cet aspect est illustré par les figures 11 et 12.

En référence à la figure 11, ces moyens anti-effraction sont constitués par un verrou 12, réalisé par exemple en un matériau métallique recouvert d'un matériau de type TPE, fixé sur la face du panneau mobile dirigée vers l'intérieur du véhicule. Plusieurs verrous peuvent bien sûr être prévus.

Tel qu'illustré par la figure 12, ce verrou 12 est destiné, en position d'obturation du panneau mobile 1, à venir s'encastrer dans un logement du cadre défini par une partie 362 faisant saillie de la traverse 36.

Ainsi, une fois le panneau en position d'obturation, il n'est pas possible pour une personne de tirer sur le panneau 1 en vue de le déplacer vers l'extérieur du véhicule, ni d'appuyer dessus pour le déplacer vers l'intérieur.

Avantageusement, une vis 121 traverse le verrou 12 et est destinée à coopérer avec la partie 362 de la traverse 36 en vue, lors d'un vissage ou d'un dévissage de la vis 121, d'ajuster la position d'obturation du panneau mobile 1.

En l'occurrence, cette vis 121 agit de façon à modifier la position d'obturation du panneau mobile 1 dans le sens de la hauteur. Une autre vis coopérant avec une autre partie du cadre pourrait également être prévue de façon à modifier la position d'obturation du panneau mobile dans le sens de sa largeur.

Le verrou qui vient d'être décrit peut être monté sur le bord supérieur 111 du panneau mobile 1, en particulier si celui-ci présente une forme rectangulaire (figure 13a), ou bien sur son bord supérieur 111 et/ou sur son bord incliné 112, dans le cas d'un panneau mobile présentant une forme trapézoïdale (figure 13b).

On note que dans le cas d'un panneau de forme trapézoïdale, des vis de réglage associées à un verrou monté au voisinage du bord supérieur 111 d'une part, et à un verrou monté au voisinage du bord incliné 112, permettront l'ajustement de la position d'obturation du panneau mobile tant dans le sens de la hauteur que dans le sens de la largeur.

Tel qu'indiqué précédemment, le principe de l'invention s'applique en particulier aux portières latérales, et s'applique également aux portières arrières, et aux hayons. Aussi, selon une variante, les portières (ou les hayons), selon l'invention peuvent être équipés d'un dispositif d'essuie-glace à balayage linéaire.

Un tel mode de réalisation est illustré par la figure 14.

Tel que cela apparaît sur cette figure, les montants de la portière intègrent des moyens de guidage permettant de déplacer linéairement, selon une direction sensiblement verticale (tel qu'indiqué par la double flèche F3), le balai 50 en vue d'évacuer l'eau déposée sur la vitre 1 (selon un autre mode de réalisation envisageable, les moyens de guidage pourraient être prévus pour assurer un déplacement linéaire selon une direction sensiblement horizontale).

Ces moyens de guidage sont constitués par un rail dans lequel sont susceptibles de se déplacer des patins portés par le balai. Ce rail comprend :
- deux chemins de coulissement s'étendant sensiblement sur toute la hauteur de la vitre 1, parallèlement l'un par rapport à l'autre ;
- deux rampes de décalage parallèles entre elles et reliant les deux chemins de coulissement, en étant inclinées par rapport à ceux-ci.

Un tel rail de guidage permet un cycle de fonctionnement selon lequel l'essuie-glace est coulissé au contact de la vitre, puis écarté de celle-ci, coulissé en sens inverse le long de la vitre (en étant écarté), puis ramené au contact de la vitre, avant d'être à nouveau coulissé le long de celle-ci.

## Revendications

1. Portière d'un véhicule automobile, comprenant un caisson de carrosserie (6), au moins un panneau vitré mobile (1), susceptible de coulisser au moins partiellement à l'intérieur dudit caisson (6) entre une position d'obturation et au moins une position d'ouverture, et au moins un montant (34, 35) portant un joint d'étanchéité (5),
**caractérisée en ce que** la face dudit panneau vitré mobile (1) tournée vers l'intérieur du véhicule prend appui contre ledit joint d'étanchéité (5), dans ladite position d'obturation,
et **en ce que** chacun desdits montants (34, 35) porte au moins une rampe de louvoiement (32, 33) permettant d'éloigner légèrement ledit panneau vitré mobile (1) dudit joint d'étanchéité (5), dans une position de coulissement dans laquelle ledit panneau mobile (1) peut coulisser sans détériorer ledit joint d'étanchéité (5), et de ramener ledit panneau vitré mobile (1) et ledit joint d'étanchéité (5) en appui l'un contre l'autre, dans ladite position d'obturation.

2. Portière selon la revendication 1, **caractérisé en ce que**, dans ladite position de coulissement, ledit panneau vitré (1) se trouve dans un plan de coulissement parallèle à un plan d'obturation occupé par ledit panneau vitré (1) en position d'obturation.

3. Portière selon l'une quelconque des revendications 1 et 2, **caractérisée en ce que** chacun desdits montants (34, 35) comprend au moins deux rampes de louvoiement (32, 33), agissant respectivement au voisinage des parties supérieure et inférieure dudit panneau vitré mobile (1).

4. Portière selon l'une quelconque des revendications 1 à 3, **caractérisée en ce qu'**au moins un desdits montants (34, 35) pénètre à l'intérieur dudit caisson (6).

5. Portière selon l'une des revendications 1 à 4, **caractérisée en ce que** le ou lesdits montants (34, 35) sont conçus de façon à ne venir en contact qu'avec la face dudit panneau vitré mobile (1) tournée vers l'intérieur du véhicule, de façon à présenter un aspect affleurant dans ladite position d'obturation.

6. Portière selon l'une quelconque des revendications 1 à 5, **caractérisée en ce que** lesdits montants (34, 35) sont reliés en leur partie supérieure par une traverse (36), pour former un cadre intérieur (3), ledit joint d'étanchéité (5) s'étendant sensiblement sur toute la longueur dudit cadre (3).

7. Portière selon l'une quelconque des revendications 1 à 6, **caractérisée en ce que** ledit panneau mobile (1) est monté sur au moins un patin (11) dont le déplacement est guidé par un rail de guidage (31) et la ou lesdites rampes de louvoiement (32, 33).

8. Portière selon l'une quelconque des revendications 1 à 7, **caractérisée en ce qu'**elle comprend des moyens d'entraînement motorisés dudit panneau mobile (1), assurant ledit coulissement.

9. Portière selon la revendication 8 , **caractérisée en ce que** lesdits moyens d'entraînement sont montés dans un rail unique (22) monté à l'intérieur dudit caisson (6), et/ou dans au moins un desdits montants (34, 35).

10. Portière selon les revendications 7 et 9, **caractérisée en ce que** lesdits moyens d'entraînement agissent sur au moins un desdits patins (11).

11. Portière selon l'une quelconque des revendications 1 à 10, **caractérisée en ce qu'**elle comprend en outre au moins un panneau fixe (4), monté dans le plan du panneau mobile (1) en position d'obturation.

12. Portière selon l'une quelconque des revendications 1 à 11, **caractérisée en ce qu'**elle comprend au moins un balai d'essuie-glace (50) destiné à être déplacé sur ledit panneau en position d'obturation, des moyens de guidage additionnels étant prévus sur ledit ou lesdits montants (34, 35) de façon à permettre un déplacement linéaire dudit ou desdits balais (50).

13. Portière selon l'une quelconque des revendications 1 à 12, **caractérisée en ce qu'**elle porte un store d'occultation (41).

14. Portière selon la revendication 13, **caractérisée en ce qu'**au moins un desdits montants (34, 35) présente des moyens de guidage du coulissement de la barre de tirage (413) dudit store (41).

15. Portière selon l'une quelconque des revendications 1 à 14, **caractérisée en ce qu'**elle comprend des moyens anti-effraction agissant sur ledit panneau mobile (1) en position d'obturation.

16. Portière selon les revendications 6 et 15, **caractérisée en ce que** lesdits moyens anti-effraction comprennent au moins un verrou (12) destiné à coopérer avec un logement de forme complémentaire défini dans un desdits montants (34, 35) ou dans ledit cadre (3), en vue d'obtenir une position d'inviolabilité dudit panneau en position d'obturation, dans laquelle le panneau (1) ne peut être tiré vers l'extérieur dudit véhicule.

17. Portière selon la revendication 16, **caractérisée en ce que** ledit ou lesdits verrous (12) sont conçus pour venir s'emboîter avec une partie faisant saillie desdits montant (34, 35) ou dudit cadre (3).

18. Portière selon l'une quelconque des revendications 1 à 17, **caractérisée en ce qu'**elle comprend des moyens de réglage de ladite position d'obturation dudit panneau mobile (1) et/ou desdits moyens anti-effraction.

19. Portière selon les revendications 6 et 18, **caractérisée en ce que** lesdits moyens de réglage sont portés par ledit panneau mobile (1) ou par un élément solidaire de celui-ci, et sont destinés à coopérer avec ledit cadre (3) pour ajuster ladite position d'obturation dudit panneau mobile (1).

20. Portière selon l'une des revendications 18 et 19, **caractérisée en ce que** lesdits moyens de réglage comprennent deux vis, l'une agissant sur ladite position d'obturation dans le sens de la largeur dudit panneau mobile (1), l'autre agissant sur ladite position d'obturation dans le sens de la hauteur dudit panneau mobile (1).

21. Portière selon l'une quelconque des revendications 1 à 20, **caractérisée en ce que** ledit ou lesdits montants (34, 35) et/ou ladite traverse (36) sont réalisés par extrusion.

22. Ensemble supérieur de portière de véhicule automobile, formant un tout prêt à être assemblé à un caisson (6) inférieur de portière de véhicule automobile, et comprenant au moins un panneau vitré mobile (1), susceptible de coulisser au moins partiellement à l'intérieur dudit caisson (6) entre une position d'obturation et au moins une position d'ouverture, et au moins un montant (34, 35) portant un joint d'étanchéité (5),
**caractérisé en ce que** la face dudit panneau vitré mobile (1) tournée vers l'intérieur du véhicule prend appui contre ledit joint d'étanchéité (5), dans ladite position d'obturation,
et **en ce que** chacun desdits montants (34, 35) porte au moins une rampe de louvoiement (32, 33) permettant d'éloigner légèrement ledit panneau vitré mobile (1) dudit joint d'étanchéité (5), dans un plan de coulissement dans lequel ledit panneau mobile (1) peut coulisser sans détériorer ledit joint d'étanchéité (5), et de ramener ledit panneau vitré mobile (1) et ledit joint d'étanchéité (5) en appui l'un contre l'autre, dans un plan d'obturation, parallèle audit plan de coulissement.

23. Ensemble supérieur de portière selon la revendication 22, **caractérisé en ce qu'**il comprend également des moyens de motorisation.

24. Ensemble supérieur de portière selon l'une quelconque des revendications 22 et 23, **caractérisé en ce qu'**au moins un desdits montants (34, 35) présente un prolongement destiné à pénétrer dans ledit caisson (6) de façon à permettre la solidarisation dudit caisson (6) avec ledit ensemble.

25. Ensemble supérieur selon l'une quelconque des revendications 22 à 24,
**caractérisé en ce qu'**il comprend des moyens de rigidification.

26. Ensemble supérieur selon la revendication 25, **caractérisé en ce que** lesdits moyens de rigidification comprennent au moins une traverse inférieure (37) reliant la partie inférieure desdits montants (34, 35).

27. Ensemble supérieur selon la revendication 26, **caractérisé en ce que** ladite traverse inférieure (37) présente des moyens de mise en place et/ou de maintien desdits montants (34, 35).

28. Ensemble supérieur selon la revendication 27, **caractérisé en ce que** lesdits moyens de mise en place et/ou de maintien comprennent au moins un manchon (371) ménagé à une extrémité de ladite traverse inférieure (37) et destiné à former un logement pour l'un desdits montants (34, 35).

29. Ensemble supérieur selon la revendication 28, **caractérisé en ce que** lesdits moyens de mise en place et/ou de maintien comprennent des rails de guidage (711) portant au moins une patte de fixation (7112) au montant (34, 35) et/ou à ladite traverse inférieure (37).

30. Ensemble supérieur selon la revendication 23 et l'une quelconque des revendication 26 à 29,
**caractérisé en ce que** lesdits moyens de motorisation sont montés sur ladite traverse inférieure (37).

31. Ensemble supérieur selon l'une des revendications 23 et 30, **caractérisé en ce que** lesdits moyens de motorisation comprennent :
- au moins un motoréducteur (21) ;
- au moins une bobine (211) couplée audit motoréducteur (21) ;
- au moins un câble (212) multi-torons ;
- au moins une gaine de protection dudit ou desdits câbles (212) ;
- des moyens de mise en tension (213) dudit ou desdits câbles (212).

32. Ensemble supérieur de portière selon l'une quelconque des revendications 21 à 30, **caractérisé en ce qu'**il porte un store d'occultation (41).

33. Véhicule automobile, **caractérisé en ce qu'**il comprend au moins une portière d'un véhicule automobile, comprenant un caisson de carrosserie (6), au moins un panneau vitré mobile (1), susceptible de coulisser au moins partiellement à l'intérieur dudit caisson (6) entre une position d'obturation et au moins une position d'ouverture, et au moins un montant (34, 35) portant un joint d'étanchéité (5),
**caractérisée en ce que** la face dudit panneau vitré mobile (1) tournée vers l'intérieur du véhicule prend appui contre ledit joint d'étanchéité (5), dans ladite position d'obturation,
et **en ce que** chacun desdits montants (34, 35) porte au moins une rampe de louvoiement (32, 33) permettant d'éloigner légèrement ledit panneau vitré mobile (1) dudit joint d'étanchéité (5), dans un plan de coulissement dans lequel ledit panneau mobile (1) peut coulisser sans détériorer ledit joint d'étanchéité (5), et de ramener ledit panneau vitré mobile (1) et ledit joint d'étanchéité (5) en appui l'un contre l'autre, dans un plan d'obturation, parallèle audit plan de coulissement.

34. Procédé de fabrication d'une portière de véhicule automobile, **caractérisé en ce qu'**il comprend les étapes suivantes :
- fabrication d'un caisson inférieur (6) de portière ;
- assemblage d'un ensemble supérieur (7) de portière de véhicule automobile, formant un tout, et comprenant au moins un panneau vitré mobile (1), susceptible de coulisser au moins partiellement à l'intérieur dudit caisson (6) entre une position d'obturation et au moins une position d'ouverture,
au moins un montant portant un joint d'étanchéité (5) contre lequel la face dudit panneau vitré mobile (1) tournée vers l'intérieur du véhicule prend appui, dans ladite position d'obturation,
chacun desdits montants (34, 35) porte au moins une rampe de louvoiement (32, 33) permettant d'éloigner légèrement ledit panneau vitré mobile (1) dudit joint d'étanchéité (5), dans un plan de coulissement dans lequel ledit panneau mobile (1) peut coulisser sans détériorer ledit joint d'étanchéité (5), et de ramener ledit panneau vitré mobile (1) et ledit joint d'étanchéité (5) en appui l'un contre l'autre, dans un plan d'obturation, parallèle audit plan de coulissement ;
- assemblage dudit caisson (6) inférieur et dudit ensemble supérieur (7).

## Claims

1. Door of a motor vehicle comprising a body shell (6) and at least one movable glass panel (1), likely to slide at least partially on the inside of the said shell (6) between a sealing position and at least one open position, and at least one strut (34, 35) bearing a watertight joint (5) **characterised in that** the side of the said movable glass panel (1) turned towards the inside of the vehicle leans against the said wateweight joint (5), in the said sealing position, and **in that** each of the said struts (34, 35) bears at least one guide track (32, 33) allowing to slightly distance the said movable glass panel (1) from the said watertight joint (5), in a sliding position in which the said movable panel (1) can slide without damaging the said watertight joint (5), and to return the said movable glass panel (1) and the said watertight joint (5) to lean against each other, in the said sealing position.

2. Door according to claim 1, **characterised in that**, in the said sliding position, the said glass panel (1) is in a sliding plane parallel to a sealing plane occupied by the said glass panel (1) in the sealing position.

3. Door according to any one of claims 1 or 2, **characterised in that** each of the said struts (34, 35) bears at least two guide tracks (32, 33), respectively next to the upper and lower parts of the said movable glass panel (1).

4. Door according to any one of claims 1 to 3, **characterised in that** at least one of the said struts (34, 35) enters into the said shell (6).

5. Door according to any one of claims 1 to 4, **characterised in that** the said strut(s) (34, 35) are designed so as only to come into contact with the side of the said movable glass panel (1) turned towards the inside of the vehicle, so as to have a flush aspect in the said sealing position.

6. Door according to any one of claims 1 to 5, **characterised in that** the said struts (34, 35) are connected at their upper parts by a cross member (36), to create an interior frame (3), the said watertight joint (5) substantially extending along the entire length of the said frame (3).

7. Door according to any one of claims 1 to 6, **characterised in that** the said movable panel (1) is mounted to at least one foot (11) whose displacement is guided via a guide rail (31) and the guide track(s) (32, 33).

8. Door according to any one of claims 1 to 7, **characterised in that** it comprises a motorised means of driving the said movable panel (1), ensuring the said sliding.

9. Door according to claim 8, **characterised in that** the said means of driving are mounted into a single rail (22) fitted to the inside of the said shell (6), and/or into at least one of the said struts (34, 35).

10. Door according to claims 7 and 9, **characterised in that** the said means of driving act on at least one of the said feet (11).

11. Door according to any one of claims 1 to 10, **characterised in that** it comprises, in addition, at least one fixed panel (4), fitted into the movable panel (1) plan in the sealing position.

12. Door according to any one of claims 1 to 11, **characterised in that** it comprises at least a windscreen wiper blade (50) intended to be moved across the said panel in the sealing position, means of guiding being planned for on the said strut(s) (34, 35) so as to allow for linear movement of the said blade(s) (50).

13. Door according to any one of claims 1 to 12, **characterised in that** it has a blind.

14. Door according to claim 13, **characterised in that** at least one of the said struts (34, 35) has means of guiding the sliding of the pull bar (413) of the said blind (41).

15. Door according to any one of claims 1 to 14, **characterised in that** it comprises burglar-proof means acting upon the said movable panel (1) in the sealing position.

16. Door according to claim 6 and 15, **characterised in that** the said burglar-proof means comprise at least a lock (12) intended to operate with a complementarily shaped housing set into one of the said struts (34, 35) or into the said frame (3), with the aim of providing a burglar-proof position of the said panel (1) in the sealing position, according to which the panel cannot be pulled towards the exterior of the said vehicle.

17. Door according to claim 16, **characterised in that** the said lock(s) (12) are designed to slot into a part that protrudes the said struts (34, 35) or the said frame (3).

18. Door according to any one of claims 1 to 17, **characterised in that** it comprises means of adjusting the said sealing position of the said movable panel (1) and/or the said burglar-proof means.

19. Door according to claims 6 and 18, **characterised in that** the means of adjusting are supported by the said movable panel (1) or by an integral part of the latter, and are intended to operate with the said frame (3) so as to adjust the said sealing position of the said movable panel (1).

20. Door according to claims 18 and 19, **characterised in that** the said means of adjusting comprise two screws, acting on the said sealing position along the width of the said movable panel (1), the other acting on the said sealing position along the height of the said movable panel (1).

21. Door according to any one of claims 1 to 20, **characterised in that** the said strut(s) (34, 35) and/or the said cross member (36) are made via extrusion.

22. Upper unit of the door of a motor vehicle, creating a kit ready to be mounted to a lower shell (6) of the door of a motor vehicle, and comprising at least one movable glass panel (1), likely to slide at least partially on the inside of the said shell between a sealing position and at least one open position, and at least one strut (34, 35) bearing a watertight joint (5), **characterised in that** the side of the said movable glass panel (1) turned towards the inside of the vehicle leans against the said waterweight joint (5), in the said sealing position, and **in that** each of the said struts (34, 35) bears at least one guide track (32, 33) allowing to slightly distance the said movable glass panel (1) from the said watertight joint (5), in a sliding plane in which the said movable panel (1) can slide without damaging the said watertight joint (5), and to return the said movable glass panel (1) and the said watertight joint (5) to lean against each other, in a sealing plane, parallel to the said sliding plane.

23. Upper unit of the door according to claim 22, **characterised in that** it also comprises means of motorisation.

24. Upper unit of the door according to any one of claims 22 or 23, **characterised in that** at least one of the said struts (34, 35) has an extension intended to enter into the said shell (6) so as to allow the interlocking of the said shell (6) with the said unit.

25. Upper unit of the door according to any one of claims 22 to 24, **characterised in that** it comprises means of stiffening.

26. Upper unit of the door according to claim 25, **characterised in that** the said means of stiffening preferably comprise at least one lower cross member (37) linking the lower part to the said struts (34, 35).

27. Upper unit of the door according to claim 26, **characterised in that** the said lower cross member (37) has means of implementation and/or support of the said struts (34, 35).

28. Upper unit of the door according to claim 27, **characterised in that** the said means of implementation and/or support comprise at least one coupling (371) fitted onto one of the ends of the said lower cross member (37) and intended to create a housing for one of the said struts (34, 35).

29. Upper unit of the door according to claim 28, **characterised in that** the said means of implementation and/or support comprise guide rails (371) having at least one mounting bracket (7112) on the strut (34, 35) and/or the lower cross member (37).

30. Upper unit of the door according to claim 23 and to any one of claims 26 to 29, **characterised in that** the said means of motorisation are fitted to the said lower cross member (37).

31. Upper unit of the door according to any one of claims 23 or 30, **characterised in that** the said means of motorisation comprise:
at least one gear motor (21);
at least one coil (211) coupled to the said gear motor (21);
at least one multi-stranded cable (212);
at least one protective sheath of the said cable(s) (212);
means (213) of placing under tension the said cable(s) (212).

32. Upper unit of the door according to any one of claims 21 to 30, **characterised in that** it has a blind (41).

33. Motor vehicle, **characterised in that** it comprises at least a door of a motor vehicle, comprising a body shell (6) and at least one movable glass panel (1), likely to slide at least partially on the inside of the said shell (6) between a sealing position and at least one open position, and at least one strut (34, 35) bearing a watertight joint (5), **characterised in that** the side of the said movable glass panel (1) turned towards the inside of the vehicle leans against the said waterweight joint (5), in the said sealing position, and **in that** each of the said struts (34, 35) bears at least one guide track (32, 33) allowing to slightly distance the said movable glass panel (1) from the said watertight joint (5), in a sliding plane in which the said movable panel (1) can slide without damaging the said watertight joint (5), and to return the said movable glass panel (1) and the said watertight joint (5) to lean against each other, in a sealing plane, parallel to the said sliding plane.

34. Method of manufacturing a door of a motor vehicle, **characterised in that** it comprises the following stages:
manufacture of a lower shell (6) of the door;
assembly of an upper unit (7) of the door of a motor vehicle, creating a kit, and comprising at least one movable glass panel (1), likely to slide at least partially on the inside of the said shell (6) between a sealing position and at least one open position, at least one strut bearing a watertight joint (5) against which the side of the said movable glass panel (1) turned towards the inside of the vehicle leans, in the said sealing position, each of the said struts (34, 35) bearing at least one guide track (32, 33) allowing to slightly distance the said movable glass panel (1) from the said watertight joint (5), in a sliding plane in which the said movable panel (1) can slide without damaging the said watertight joint (5), and to return the said movable glass panel (1) and the said watertight joint (5) to lean against each other, in a sealing plane, parallel to the said sliding plane; assembly of the said lower shell (6) and the said upper unit (7).

## Patentansprüche

1. Kraftfahrzeugtür, die einen Karosseriekasten (6), mindestens eine bewegliche Glasscheibe (1), welche zumindest teilweise innerhalb des besagten Kastens (6) zwischen einer geschlossenen Position und mindestens einer Offenposition gleiten kann, sowie mindestens einen eine Dichtung (5) tragenden Pfosten (34, 35) aufweist,
**dadurch gekennzeichnet, dass** die zum Inneren des Fahrzeugs gewandte Fläche der beweglichen Glasscheibe (1) in der geschlossenen Position an der Dichtung (5) anliegt und dass jeder der Pfosten (34, 35) mindestens eine Rampe (32, 33) zum Erzeugen einer Hin-und Her-Bewegung aufweist, die es ermöglicht, die bewegliche Glasscheibe (1) leicht von der Dichtung (5) zu entfernen, um sicherzustellen, dass diese bewegliche Glasscheibe (1) im Verlauf einer Gleitposition gleiten kann, ohne die Dichtung (5) zu beschädigen und dann, in der geschlossenen Position, die Glasscheibe (1) und die Dichtung (5) wieder aneinander zu drücken.

2. Fahrzeugtür nach Anspruch 1,
**dadurch gekennzeichnet, dass** die bewegliche Glasscheibe (1) sich in der Gleitposition in einer parallel zu einer Verschlussebene verlaufenden Gleitebene befindet, welche die Glasscheibe (1) in der geschlossenen Position bildet.

3. Fahrzeugtür nach einem der Ansprüche 1 oder 2,
**dadurch gekennzeichnet, dass** jeder Pfosten (34, 35) mindestens zwei Rampen (32, 33) zum Erzeugen einer Hin- und Her-Bewegung aufweist, die jeweils in der Nähe des oberen bzw. des unteren Teils der beweglichen Glasscheibe (1) wirken.

4. Fahrzeugtür nach einem der Ansprüche 1 bis 3,
**dadurch gekennzeichnet, dass** mindestens einer der Pfosten (34, 35) in den Kasten (6) hineinragt.

5. Fahrzeugtür nach einem der Ansprüche 1 bis 4,
**dadurch gekennzeichnet, dass** der oder die Pfosten (34, 35) so konzipiert ist/sind, dass er/sie nur die zum Inneren des Fahrzeuges gewandte Fläche der beweglichen Glasscheibe (1) berührt/berühren, so dass sie in der verschlossenen Position einen bündigen Abschluss bildet/bilden.

6. Fahrzeugtür nach einem der Ansprüche 1 bis 5,
**dadurch gekennzeichnet, dass** die oberen Teile der Pfosten (34, 35) miteinander über eine Querstrebe (36) verbunden sind, um einen inneren Rahmen (3) zu bilden, wobei die Dichtung (5) sich in etwa über die gesamte Länge dieses Rahmens (3) erstreckt.

7. Fahrzeugtür nach einem der Ansprüche 1 bis 6,
**dadurch gekennzeichnet, dass** die bewegliche Glasscheibe (1) auf mindestens einer Gleitkufe (11) montiert ist, deren Bewegung von einer Führungsschiene (31) und von der Rampe bzw. von den Rampen (32, 33) zum Erzeugen einer Hin- und Her-Bewegung geführt wird.

8. Fahrzeugtür nach einem der Ansprüche 1 bis 7,
**dadurch gekennzeichnet, dass** sie über einen Motorantrieb für die bewegliche Glasscheibe (1) zum Sicherstellen der Gleitbewegung verfügt.

9. Fahrzeugtür nach Anspruch 8,
**dadurch gekennzeichnet, dass** die Antriebsmittel auf einer einzigen, im Inneren des Kastens (6) eingesetzten Schiene (22) und/oder in mindestens einem der Pfosten (34, 35) eingebaut sind.

10. Fahrzeugtür nach den Ansprüchen 7 und 9,
**dadurch gekennzeichnet, dass** die Antriebsmittel auf mindestens einer der Kufen (11) gleiten.

11. Fahrzeugtür nach einem der Ansprüche 1 bis 10,
**dadurch gekennzeichnet, dass** sie mindestens ein feststehendes Paneel (4) aufweist, das in der geschlossenen Position in der Ebene der beweglichen Scheibe (1) eingesetzt ist.

12. Fahrzeugtür nach einem der Ansprüche 1 bis 11,
**dadurch gekennzeichnet, dass** sie mindestens einen Scheibenwischerschleifer (50) aufweist, der in der geschlossenen Position über das Paneel bewegt werden kann, wobei zusätzliche Führungsmittel auf dem bzw. den Pfosten (34, 35) vorgesehen sind, um eine lineare Bewegung des Scheibenwischerschleifers (50) bzw. der Scheibenwischerschleifer (50) zu ermöglichen.

13. Fahrzeugtür nach einem der Ansprüche 1 bis 12,
**dadurch gekennzeichnet, dass** sie ein Verdeckungsrollo (41) trägt.

14. Fahrzeugtür nach Anspruch 13,
**dadurch gekennzeichnet, dass** mindestens einer der Pfosten (34, 35) Führungsmittel für die Gleitbewegung der Zugstange (413) des Verdeckungsrollos (41) aufweist.

15. Fahrzeugtür nach einem der Ansprüche 1 bis 14,
**dadurch gekennzeichnet, dass** sie über Einbruchschutzmittel verfügt, die auf die bewegliche Glasscheibe (1) in der geschlossenen Position wirken.

16. Fahrzeugtür nach den Ansprüchen 5, 6 und 15,
**dadurch gekennzeichnet, dass** die Einbruchschutzmittel mindestens einen Riegel (12) aufweisen, der mit einer in einem der Pfosten (34, 35) oder im Rahmen (3) eingearbeiteten, komplementären Aussparung zusammenwirkt, um eine derartige Unversehrtheit des Paneels in der geschlossenen Position zu erreichen, dass das Paneel (1) sich nicht aus dem Fahrzeug heraus ziehen lässt.

17. Fahrzeugtür nach Anspruch 16,
**dadurch gekennzeichnet, dass** der Riegel bzw. die Riegel (12) so ausgebildet ist/sind, dass er/sie sich mit einem herausragenden Teil des Trägers (34, 35) bzw. des Rahmens (3) zusammenschließt/zusammenschließen.

18. Fahrzeugtür nach einem der Ansprüche 1 bis 17,
**dadurch gekennzeichnet, dass** sie über Mittel zum Einstellen der geschlossenen Position der beweglichen Scheibe (1) und/oder der Einbruchschutzmittel verfügt.

19. Fahrzeugtür nach den Ansprüchen 5, 6 und 18,
**dadurch gekennzeichnet, dass** diese Einstellmittel von der beweglichen Scheibe (1) oder von einem mit ihr zusammenhängendes Element getragen werden, wobei sie mit dem Rahmen (3) zusammenwirken sollen, um die geschlossene Position des beweglichen Paneels (1) einzustellen.

20. Fahrzeugtür nach einem der Ansprüche 8 oder 19,
**dadurch gekennzeichnet, dass** die Mittel zum Regeln über zwei Schrauben verfügen, wobei die eine der Breite des beweglichen Paneels (1) nach auf die geschlossene Position dieses Paneels und die andere der Höhe des beweglichen Paneels (1) nach auf die geschlossene Position dieses Paneels wirkt.

21. Fahrzeugtür nach einem der Ansprüche 1 bis 20,
**dadurch gekennzeichnet, dass** der bzw. die Pfosten (34, 35) und/oder die Querstrebe (36) nach dem Strangpressverfahren hergestellt sind.

22. Obere Gruppe einer Kraftfahrzeugtür, die ein Fertigteil bildet, das in einen unteren Kasten (6) einer Kraftfahrzeugtür eingebaut werden kann, wobei diese Gruppe mindestens eine bewegliche Glasscheibe (1), die zumindest teilweise innerhalb des Kastens (6) zwischen einer geschlossenen Position und mindestens einer geöffneten Position gleiten kann, sowie mindestens einen eine Dichtung (5) tragenden Pfosten (34, 35) umfasst,
**dadurch gekennzeichnet, dass** die dem Inneren des Fahrzeugs zugewandte Fläche der beweglichen Glasscheibe (1) in der geschlossenen Position an die Dichtung (5) gedrückt wird und dass jeder der Pfosten (34, 35) mindestens eine Rampe (32, 33) zum Erzeugen einer Hin- und Her-Bewegung aufweist, die es ermöglicht, die bewegliche Glasscheibe (1) leicht von der Dichtung (5) zu entfernen, um sicherzustellen, dass diese bewegliche Glasscheibe (1) im Verlauf einer Gleitposition gleiten kann, ohne die Dichtung (5) zu beschädigen und dann, in
einer parallel zur Gleitebene verlaufenden Verschlussebene, die Glasscheibe (1) und die Dichtung (5) wieder aneinander zu drücken.

23. Obere Gruppe einer Fahrzeugtür nach Anspruch 22,
**dadurch gekennzeichnet, dass** sie auch über Motorantriebsmittel verfügt.

24. Obere Gruppe einer Fahrzeugtür nach einem der Ansprüche 22 oder 23,
**dadurch gekennzeichnet, dass** mindestens einer der Pfosten (34, 35) eine Verlängerung aufweist, die in den Kasten (6) hineinragen soll, um den Zusammenbau dieses Kastens (6) mit der Gruppe zu ermöglichen.

25. Obere Gruppe nach einem der Ansprüche 22 bis 24,
**dadurch gekennzeichnet, dass** sie über Versteifungsmittel verfügt.

26. Obere Gruppe nach Anspruch 25,
**dadurch gekennzeichnet, dass** die Versteifungsmittel mindestens eine untere Querstrebe (37) aufweisen, welche die unteren Teile der Pfosten (34, 35) miteinander verbindet.

27. Obere Gruppe nach Anspruch 26,
**dadurch gekennzeichnet, dass** die untere Querstrebe (37) über Mittel zum Einsetzen und/oder zum Halten der Pfosten (34, 35) verfügt.

28. Obere Gruppe nach Anspruch 27,
**dadurch gekennzeichnet, dass** die besagten Mittel zum Einsetzen und/oder zum Halten mindestens eine am unteren Ende der unteren Querstrebe (37) ausgebildeten Muffe (371) aufweisen, die ein Gehäuse zur Aufnahme einer der Pfosten (34, 35) bilden soll.

29. Obere Gruppe nach Anspruch 28,
**dadurch gekennzeichnet, dass** die Mittel zum Einsetzen und/oder zum Halten Führungsschienen (711) aufweisen, die mindestens einen Nippel (7112) zum Befestigen an den Pfosten (34, 35) und/oder an die untere Querstrebe (37) aufweisen.

30. Obere Gruppe nach Anspruch 23 sowie nach einem der Ansprüche 26 bis 29,
**dadurch gekennzeichnet, dass** die Motorantriebmittel auf der unteren Querstrebe (37) eingebaut sind.

31. Obere Gruppe nach einem der Ansprüche 23 oder 30,
**dadurch gekennzeichnet, dass** die Motorantriebmittel folgendes umfassen:
- mindestens einen Getriebemotor (21),
- mindestens eine mit dem Getriebemotor (21) gekoppelte Spule (211);
- mindestens ein mehradriges Kabel (212);
- mindestens eine Schutzhülle für das (die) mehradrige(n) Kabel (212);
- Mittel (213), um das oder die mehradrige(n) Kabel (212) unter Spannung zu setzen.

32. Obere Gruppe einer Fahrzeugtür nach einem der Ansprüche 21 bis 30,
**dadurch gekennzeichnet, dass** sie ein Verdeckungsrollo (41) trägt.

33. Kraftfahrzeug,
**dadurch gekennzeichnet, dass** es mindestens eine Fahrzeugtür aufweist, welche einen Karosseriekasten (6), mindestens eine bewegliche Glasscheibe (1), die zumindest teilweise innerhalb des Kastens (6) zwischen einer verschlossenen und mindestens einer geöffneten Position gleiten kann, sowie mindestens einen eine Dichtung (5) tragenden Pfosten (34, 35) aufweist,
**dadurch gekennzeichnet, dass** die zum Inneren des Fahrzeugs gerichtete Fläche der beweglichen Glasscheibe (1) in der verschlossenen Position an der Dichtung (5) anliegt
und dass jeder der Pfosten (34, 35) mindestens eine Rampe (32, 33) zum Erzeugen einer Hin- und Her-Bewegung aufweist, die es ermöglicht, die bewegliche Glasscheibe (1) leicht von der Dichtung (5) zu entfernen, um sicherzustellen, dass diese bewegliche Glasscheibe (1) im Verlauf einer Gleitposition gleiten kann, ohne die Dichtung (5) zu beschädigen und dann, in einer parallel zur Gleitebene verlaufenden Verschlussebene, die Glasscheibe (1) und die Dichtung (5) wieder aneinander zu drücken.

34. Verfahren zur Herstellung einer Kraftfahrzeugtür,
**dadurch gekennzeichnet, dass** es die folgenden Schritte umfasst:
- Herstellung eines unteren Türkastens (6);
- Zusammenbau einer oberen Gruppe (7) einer Kraftfahrzeugtür, die eine fertige Gruppe bildet und mindestens eine bewegliche Glasscheibe (1) aufweist, die zumindest teilweise im Inneren des Kastens (6) zwischen einer verschlossenen Position und einer offenen Position gleiten kann;
wobei mindestens ein Pfosten eine Dichtung (5) trägt, an welche sich die zum Inneren des Fahrzeugs gewandte Fläche der beweglichen Glasscheibe (1) in der geschlossenen Position anlehnt,
wobei der Pfosten (34, 35) mindestens eine Rampe (32, 33) zum Erzeugen einer Hin-und Her-Bewegung aufweist, die es ermöglicht, die bewegliche Glasscheibe (1) leicht von der Dichtung (5) zu entfernen, um sicherzustellen, dass diese bewegliche Glasscheibe (1) im Verlauf einer Gleitposition gleiten kann, ohne die Dichtung (5) zu beschädigen und dann, in einer parallel zur Gleitebene verlaufenden Verschlussebene, die Glasscheibe (1) und die Dichtung (5) wieder aneinander zu drücken;
- Zusammenbau des unteren Kastens (6) und der oberen Gruppe (7).
